# EUROPEAN PATENT APPLICATION

(11) **EP 4 333 324 A1**
(43) Date of publication of application: **06.03.2024**
(21) Application number: 22306309.0
(22) Date of filing: 05.09.2022
(51) Int. Cl.: H04B 7/185

(54) **CONNECTION MANAGEMENT BETWEEN A USER EQUIPMENT AND A SATELLITE**

(71) Applicant: THALES DIS FRANCE SAS, 92190 Meudon (FR)
(72) Inventor: BREUER, Volker, 16727 BOETZOW (DE); WEIHMEIER, Lars, 14612 FALKENSEE (DE); FINE, Jean-Yves, 13010 Marseille (FR)
(74) Representative: Thomas, Christine Marie Catherine

(57) **Abstract**

The present invention relates to a method to manage connection between a user equipment having a fixed position and a satellite having a nominal visibility window for the user equipment, said nominal visibility window being preliminarily calculated by a network managing said satellite, said method comprising the following steps of, for the network:
- receiving a visibility information from the user equipment,
- altering the calculated nominal visibility window in function of the received visibility information, to obtain an altered visibility window,
-for next connection, paging the user equipment, from the satellite, according to the altered visibility window or providing a PSM information modified according to the altered visibility window.

## Description

### FIELD OF THE INVENTION

The present invention relates to a method to manage connection between a user equipment having a fixed position and a satellite having a nominal visibility window for the user equipment, said nominal visibility window being preliminarily calculated by a network managing said satellite.

The invention also pertains to a network implementing said method and to a user equipment collaborating with said network.

### BACKGROUND OF THE INVENTION

Internet of Things (loT) devices, designated as User Equipment in the following (UE), are most likely to be served by Low-Earth-Orbit (LEO) satellites if no terrestrial coverage, provided by a Terrestrial Network (TN), is available.

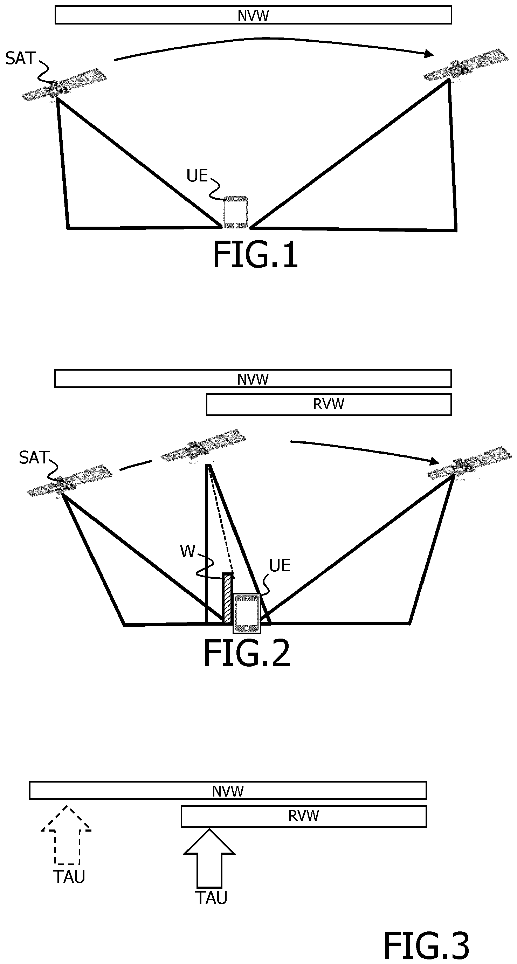

LEO satellites are non-static and hence their coverage area moves. Especially at the beginning of NTN for 3GPP deployments a consecutive coverage may not be achieved and even at later stages such devices may be in areas, for tracking as well as for tracing, which are only covered occasionally for economic reasons. The document referenced under R1-2106776, "LEO satellite flyover timing", gives an example how such a coverage looks like. Typically a single satellite covers an area every 10-13 hours and is visible for 1 to 4 minutes. Such coverage times and durations are illustrated on figure 1 "Flyovers and duration of visibility (≥ 30 degrees elevation) for a single LEO-600 km satellite" of the document R1-2106776.

Being aware of this, 3GPP has started an initiative to adapt Power Saving Mode (PSM), and thus also eDRX, to expected satellite coverage times, including information on ephemeris data of satellites being next visible.

However, the approaches being standardized and discussed in context of Rel.-17 have only limited capability to solve the problem. Such approaches are intended to adapt PSM, i.e. UE activity time, to only those times when a satellite becomes next available and position where it will appear. A UE can then use this data and incorporate its own motion in order to calculate position and time when next connection can be made. Rel.-17 approaches only covers the nominal cases, i.e. cases where the UE is on flat earth and has no environment where in one or other direction the reception could be disturbed or circumvented by buildings or others.

Indeed Rel.-17 considers "nominal" coverage as calculated by the network, meaning that calculations are based on UE position and satellite tracks. Next appearing of a satellite is thus calculated and if, for example power saving mode (PSM) is requested by the UE, the network matches such PSM request with the satellite presence in order to define a "nominal" window where the wake-up and reachability fall. PSM may consist of an idle phase, in which the UE listens for paging. Once the idle phase is finished, it is followed by a deep-sleep phase, where at its end the UE performs a TAU update, i.e. sending a tracking area update message to the network. In case of NTN networks, the sleeping phase is adapted to the non-visibility times of satellites. Besides, idle phase or time when sending TAU update is within the satellite nominal visibility window also called normal coverage.

PSM (Power Saving Mode) is a feature defined in 3GPP LTE. In context of 3GPP NR, a feature called MICO (Mobile initiated context only) with same purpose and basic functioning was defined. w This feature has the same principle as PSM and within a certain time only mobile initiated context would be possible if a base station would be in reach as the UE may sleep during said time. Hence when speaking of PSM power saving mode in general is meant especially where a device may perform a longer deep-sleep during a phase where no incoming calls are expected and hence save power.

No deviation from normal coverage was raised in discussed scenarios and captured in the corresponding technical report. However, in many situations, satellite may not be seen at beginning or end of a nominal visibility window, for example due to surrounding buildings or in mountain areas. The satellite hence does not appear when expected so. In such a case, no satellite can be detected by the UE and no message can be send (TAU update) or received (paging). Satellite seen late leads to problems in network i.e. paging and context maintenance of the device.

Another situation is when the satellite disappears early, leading to connection breaks prior nominal disappearance of satellite or when still idle paging window is active. The terminal thus waits for server feedback via the network no such feedback can be received. The nominal expected visibility window as calculated by the network and as used in the determination of PSM parameters or for paging may not fit to the real visibility of the satellite as experienced by the device. This leads to unreachability, connection loss, lost feedback or de-registration effects of the device, only because the device cannot see the expected satellite momentarily as expected and hence cannot contact the network in case of PSM or receive paging from the network.

Further alternative and advantageous solutions would, accordingly, be desirable in the art.

### SUMMARY OF THE INVENTION

The present invention aims at enabling consideration of real satellite visibility window in the management of the connection of a user equipment to a satellite.

The present invention is defined, in its broadest sense, as a method to manage connection between a user equipment having a fixed position and a satellite having a nominal visibility window for the user equipment, said nominal visibility window being preliminarily calculated by a network managing said satellite, said method comprising the following steps of, for the network:
- receiving a visibility information from the user equipment,
- altering the calculated nominal visibility window in function of the received visibility information, to obtain an altered visibility window,
- for next connection, paging the user equipment, from the satellite, according to the altered visibility window or providing a PSM information modified according to the altered visibility window.

The invention proposes a solution to alter the network calculated satellite visibility window in case that traffic or paging reception as expected by the UE is not possible, i.e. the satellite just not appears at the expected time and position and is detected some time later or the satellite disappears too early and is no more detectable. For this, it uses a specific UE behaviour to enable a non-nominal coverage calculation. This behavior enables to inform the network of reduced coverage window in order for the network to alter the expected coverage window by feedback.

Such behavior may especially be controlled by a configuration flag which is active for devices where such behavior is expected i.e. being momentarily fixed position and in an area where such visibility impacts may occur. It is here noted that the terms "fixed position" covers momentary fixed positions. It means that the invention addresses use cases where devices are fixed for long times, and then moved, for example barriers at roadwork, roadwork/construction signs.

The invention enables to address situations where NTN non-consecutive satellite coverage for loT devices deviates from nominal expected coverage. This does not give a signaled window but rather times of appearance/disappearance, which constitutes the altered coverage window.

When used, the PSM is calculated by the network in such a way that the active times of the PSM cycle (sending TaAU, exchanging data or staying in idle T3324 expiry) entirely falls within the satellite coverage window. With the invention, the network is able to calculate an altered window taking into account real times of appearance/disappearance.

Such a solution is an adaptation method is especially suited for fixed devices and hence we claim for a configuration which is intended for such devices to indicate late visibility or early disappearance, such configuration in the device may depend on the location as such or whether the UE is a fixed location device in general. As an example it could be roadside units such as street lamps or traffic lights, or outdoor meter/sensor devices but also devices being static/fixed position for longer times, such as roadwork construction signs or barriers.

The problem on paging load caused by UEs with non-nominal coverage expectation in the NTN network is also issue, which does not only affect loT devices but also NTN networks in general. It needs to be noted that UE implementation only would have no influence on unsuccessful paging of the network due to satellite disappearance. Hence a method based on UE feedback and performing calculation in the network is best suited. With the invention, the calculated satellite reception window is based on UE calculations and feedback.

Hence the invention helps saving network signaling load and also ensures reachability for the device in case of shortened reachability. As it is implemented in the network, the invention is beneficial as paging during invisibility times or wrong PSM parameter provisioning is thus circumvented.

According to an embodiment, the visibility window information is an environmental condition of the user equipment.

This embodiment is the simpler approach to provide the necessary UE feedback to the network for it to calculate an accurate altered coverage window.

According to a specific feature, the environmental condition is a height of the user equipment compared to the height of the geographical or building surrounding. It means that a device fixed on a mast on flat land should not show any deviation in expected nominal satellite coverage window, i.e. on a power pole.

The network can then calculate an altered UE reception window in advance. The calculated altered satellite reception window is here an estimate with an information given by the user equipment. The invention considers the real environmental conditions concerning shadowing and hence allows methods to alter the satellite reception window from the nominal expected window.

According to another embodiment, the visibility information is a late appearance indication with an ephemeris data.

With this embodiment, when satellite appears too late, the UE sends late appearance indication to network also including ephemeris data when or where the satellite was detected. This enables network to schedule traffic taking into account an altered coverage window. Especially for paging, it avoids unnecessary paging of the UE.

According to another embodiment, the visibility information is an early disappearance indication with an ephemeris data or time.

As for late appearance or early disappearance from the provided time, corresponding satellite ephemeris data can be calculated as the satellite tracks are known.

Such a visibility information on early disappearance enables the network to receive at the next appearance that, in the previous appearance of the satellite, this last was not anymore available at the expiration of the PSM timer T3324. It enables the network to modify the PSM in order for the device to enter in deep sleep after having correctly performed exchanges with the network and during idle period T3324 network satellite was still visible.

According to an advantageous embodiment, the method further comprises a step of calculating altered coverage windows for several consecutive satellites visible from the user equipment.

The network has then future information when satellites appear and disappear due to geographical circumstances for a certain UE. The network can thus further adapt its behaviour/PSM parameterization and paging activity accordingly.

Advantageously, the method uses visibility information as received from the user equipment for multiple satellites to calculate altered coverage windows for the user equipment, thus using multiple observations.

Combining multiple observations in the network enables to optimize the satellite visibility windows for the multiple satellites taking into account the real scenario. This is particularly useful as satellites may have different tracks and hence the experienced shadowing may have different effects.

According to two specific implementations, an accumulation of several observations is done in the device or in the network.

These two implementations enable to take into account the different tracks of the satellites by accumulating several observations for multiple satellites.

According to an advantageous feature, the method comprises a preliminary step of receiving a configuration flag for limited visibility from the user equipment.

The configuration flag for limited visibility is a functionality enabled in the user equipment to control the method of the invention implemented in the network. It enables to inform the network that data are sent relative to a limited visibility of the satellite. It is here noted that the different features, implementations and embodiments as presented can be used in parallel or consecutively to enable the network and the user equipment to face various situations.

The invention also relates to a user equipment having a fixed position adapted to manage connection listening and being paged or based on PSM with a satellite having a nominal visibility window for the user equipment, said nominal visibility window being preliminarily calculated by a network managing said satellite, said user equipment being adapted to send a visibility information to the network and to being paged according to an altered visibility window or PSM information modified according to the altered visibility window.

The invention is interesting for fixed location devices or at least momentary fixed location devices.

According to an advantageous feature, the visibility information is an observed late appearance or an observed early disappearance of the satellite.

With this advantageous feature, the UE, which advantageously has furthermore the limited visibility configuration flag enabled, sends back a real window by sending the observed appearance or disappearance. It enables the satellite visibility correction according to the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates a situation where a user device is able to reach a moving satellite during all the nominal visibility window;
- Figure 2 illustrates a situation where a user device is not anymore able to reach a moving satellite during all the nominal visibility window;
- Figure 3 illustrates a PSM/configuration/TAU update failure in the situation of figure 2 ; and
- Figures 4A and 4B illustrates the method of the invention in case of early disappearance;
- Figure 5 is a flow chart of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

Figure 1 schematically shows a situation where a user equipment UE is able to be reached by a moving satellite SAT during a whole nominal visibility window NVW. The non-contiguous coverage impact for a location fixed device gives a nominal visibility. According to nominal visibility, the network calculates reachability window, for paging or to configure PSM with its timers accordingly. Here, the same angle is considered as free space to both sides of the UE, hence when the satellite flies over the device the entire flyover time the satellite is visible for the device.

Figure 2 schematically shows a situation where the user equipment UE is not anymore able to be reached by a moving satellite SAT during a whole nominal visibility window NVW because of specific geographical circumstances. Here, a fixed location or momentarily fixed location loT device UE experiences impacts due to deviations of expected nominal satellite coverage compared to real coverage. With the invention, the UE will inform the network accordingly according to its configuration settings and observations.

On figure 2, the nominal visibility NVW as calculated by the network with open sky conditions and the reduced visibility RVW of a fixed location device UE is shown with "shadowing" from a wall W. The satellite SAT will be visible only during a real reduced reception window/duration RVW which is smaller than the nominal calculated durations NVW due to shadowing from mountains or buildings causing early disturbance (i.e. late appearance non-reachability due to mountain or buildings). Buildings, mountains and other obstacles are susceptible to generate such a situation. The invention enables to deal with the shadowing of the reception, especially in urban and rural areas.

In a similar manner also buildings or mountains could lead to an early disappearance of the satellite SAT. This may lead to radio link failure, if the UE was in an active session or, if PSM is configured, in a call back timer T3324 interval. T3324 indeed describes the time the UE stays in ACTIVE / IDLE mode following a wake-up for Periodic Tracking Area Update. As a consequence the time when UE stays in idle for being reachable prior going to deep sleep may partially or fully be « «shadowed » from a building or mountain. Therefore, this may lead to unsuccessful paging attempts form the network which could be caused by a higher layer acknowledgement from sent data. This causes unnecessary paging load und unexpected unreachability of the UE.

Typically, without the invention, the network adjusts its behavior to the nominal reachability window NVW. This behavior includes paging i.e. the network may try to page the UE, even though the satellite is not yet visible for the UE. This leads to paging escalation in the network and to unsuccessful receiver activity in the device.

Such a shadowing can thus be harmful as paging an UE, which is in late or early disappearance, will lead to a failure as paging will not be received. Hence the network will classically do a paging escalation, meanwhile increasing the signaling load, which penalizes the network and its capacity. Paging escalation may also lead in the network to a wrong conclusion that UE has left. In such a case, once UE reconnects, it sends TAU or other configuration messages while the entire UE context may already have been deleted. In such a case, the context needs to be newly setup, which generates power consumption which could have been avoided. In the same way, late appearance also leads to wrong PSM calculation of the network. Hence said expected coverage needs to be altered.

This is illustrated on figure 3 where the two nominal NVW and real RVW visibility windows are shown in case of late appearance. If the PSM is calculated, as classically done, taking into account the nominal visibility NVW, after T3412ext of the PSM expired, a tracking area update TAU needs to be send by the UE. The network expects this TAU update from the UE and, if not received, the UE context is classically deleted by the network.

An example of late appearance is shown on figure 3, the satellite SAT is still invisible when TAU timer 3412ext expires and UE is due to send TAU update. In this case UE shall wait the satellite to become visible.

In such a situation, the UE indeed makes its TAU update while the satellite is not yet visible. Such an loT device thus misses its TAU update, illustrated with a dashed line arrow, due to PSM being based on nominal calculation and late visibility of the satellite. It then performs TAU update again once satellite is visible. With the invention, the UE includes an indication on earlier invisibility of the satellite, which can be the time when satellite became visible and hence contains the earlier invisibility indication implicitly.

It enables the network to consider said indication and to adapt the PSM for the UE for the next satellite occurrence. An altered visibility window is then calculated enabling to assign a corrected PSM for next fly over cycle, i.e. considering late appearance of the satellite.

In addition the network will not immediately de-register UEs missing its TAU unless entire coverage period of said satellite expired, especially for those being configured accordingly, typically having a limited visibility flag. Such a configuration insures a satellite visibility check.

According to the invention, the UE then performs delayed TAU update including an indication relative to satellite invisibility and advantageously to the delay due to satellite invisibility. Hence the network can adjust the PSM timing according to real satellite visibility according to the invention.

The network has thus a different behavior for UE having said limited visibility configuration indication, in case TAU is missed, the network shall at least wait for the entire satellite visibility period to expire unless further actions such as i.e. UE context deletion or paging escalations are performed.

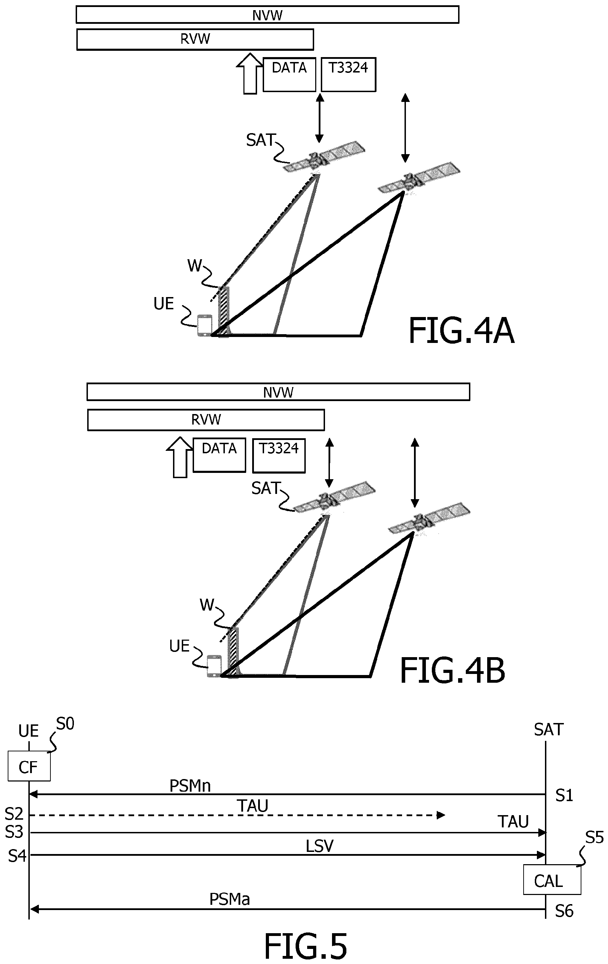

Figure 4A shows a case of early disappearance. The nominal satellite reception window NVW as calculated by the network with open sky conditions is shown as well as a reduced reception window RVW due to shadowing from mountains or buildings causing early disturbance/disappearance.

According to the PSM, the UE executes TAU after T3412ext is expired, i.e. at the beginning of the real visibility window RVW, which corresponds to the beginning of the nominal visibility window NVW. The UE then sends data if any and stays during T3324 in idle. It then enters sleep mode until next T3412ext. A UE which has performed TAU update (T3412ext expired) is in a data session or wait for a timer T3324 to expire, i.e. callback/reachability timer prior deep sleep.

As shown on figure 4A, the PSM period is adjusted by the network, especially the timer T3324 is be partially out of the real reception window RVW. It means that the UE is able to send the TAU and all or part of the data but T3324 is reached after the satellite has disappeared. This means that the nominal mode reception window NVW for call backs/confirmation is in this scenario is partially out of real reception window RVW. After the end of the real visibility window RVW, the UE enters in deep sleep. Hence in this scenario, no server confirmation can be received, as satellite is lost prior start/expiry of T3324. By shortening/adapting the TAU update timer T3312ext it can be ensured that the entire T3324 idle timer is still in the RVW of the satellite. T3324 is set in such a way that i.e. the contacted server from the device could give a higher layer acknowledgment on the reception, which may take several seconds. Hence T3324 depends on UE application and timer to be preferably modified so that entire data and idle waiting time fits into the RVW is the T3312ext TAU timer. If disappearance comes early, even data transmission could be disturbed. With the invention, while experiencing early disappearance of the satellite, the UE will inform the network in its next duty cycle accordingly.

On figure 4B is illustrated the new behavior of the UE and the network after occurrence of the early disappearance as shown on figure 4A, i.e. after feedback from the UE device on early disappearance as disclosed in figure 4A in a period n-1. At next PSM period n, the network adjusts the PSM duration so that data transmission and call back time are still within real satellite reception window RVW, at latest in period n+1.

Thus, with the invention, when connection n-1 breaks due to early disappearance of the satellite or when the UE cannot see the satellite anymore while being in idle monitoring period prior deep sleep, the UE sends a message at next satellite appearance n to the satellite network to inform about the early disappearance of the previous satellite. The network can thus accordingly adapt the PSM configuration for the next cycle of the satellite. In case that the general extended TAU time configured for the UE (T3312ext) corresponds to the flyover times of said satellite, i.e. every 12-14 hours, it is an easy process to adapt. If the UE contacts to the network are via several satellites, the network may a priori adapt the configuration also for the other satellites considering the different tracks. However it still may indicate to the UE that an indication of late appearance or early disappearance is needed, i.e. to further adjust the visibility window for various satellite tracks.

In this scenario of early disappearance, the UE sends a new message for next satellite either if connection break happened during data session, typically a Radio Link Failure RLF, advantageously with an identifier of the satellite, and a corresponding time stamp. In case of invisibility of the satellite during next TAU update on satellite disappearance prior T3324 expiration. Said message can be part of TAU negotiation in the next cycle and can also include timer value when connection to satellite become lost so that satellite knows a magnitude of adjustment required.

With the invention, in case of early disappearance in flyover cycle n, information is provided in n+1 and a change happens for the next communication/awaking session n+2.

In a more advanced case, the network can consider besides UE feedback on disappearance also the difference in satellite tracks to adjust the window. Multiple feedbacks or usage of environmental card of UE location can lead to a better adjustment. The network thus assembles several feedbacks from a device and performs corresponding alignment for all possible satellite tracks or for each satellite individually. The network can maintain a map for fixed positions of early disappearance or late satellite appearance and applies it according to the UE. It can be particularly adapted for routes through mountains or respectively valleys in between and hence it can also be used for moving devices on certain fixed and predetermined tracks being a suite of fixed positions in the meaning of the invention.

With the invention, the NTN network is aware of late appearance or early disappearance. In case of early disappearance, the invention enables the satellite to wait for real full visibility cycle and to repeat paging or adapt paging time next occurrence accordingly.

Figure 5 is a flow chart for compensation in case of late satellite appearance of next PSM timers to accommodate for the difference between nominal and real satellite visibility by a fixed location UE in partially shadowed conditions, e.g. by mountains or buildings. In case of late satellite appearance, feedback may be included directly in TAU update or in a following message. The network can adjust the PSM period, i.e. extend the timer T3412ext. This may also be stipulated by the UE proposing an increased T3412ext.

For example, the UE being a fixed location loT device is configured CF in a preliminary step S0 with satellite window altering due to limited visibility.

In a step S1, the network provides, here with the satellite SAT, a PSMn configuration including T3412ext, T3324 to the UE. The values of the PSMn are based on nominal satellite window as estimated for the device in free space environment.

Due to limited visibility with a late appearance of the satellite, T3412 expires but satellite is not visible for UE. A first TAU update fails in a step S2 or is not sent by the UE due to satellite invisibility as also illustrated on figure 3. It is here noted that the network notices T3412 expiry and absence of reception of the awaited TAU update from the UE, but however does not perform any immediate action, like removing the UE context. Then, after the satellite SAT becomes visible, the UE performs a successful TAU update in a step S3. The UE thus indicates a late satellite visibility LSV in a step S4. A new message extension is advantageously used, but also, from the deviation between expected TAU and received TAU, the network can calculate the corresponding adjustment need.

Then, in a step S5, the network connected to the satellite SAT uses the delay between T3412ext expiry and received TAU update for calculating CAL a new extTAU timer to be considered in an altered power saving mode PSMa. To exclude late visibility, the nominal window is shortened to a real altered window. The network may further use differences on satellite tracks and other information to further adjust if next communication occurrence is served by a different satellite or the satellite track differs. The altered PSMa is then sent to the UE in a step S6.

The invention enables to reduce unnecessary network signaling load for fixed/momentary fixed loT location devices, including unnecessary paging and deregistration/registration attempts. It further avoids UE battery draining and UE non-reachability impacts by using advanced PSM setting. The invention addresses situations where PSM period assigned by the network (especially TAU update point in time based on T3312ext, or T3324 idle timer) are full or partially out of the real reception window. In such a case, the invention avoids the UE to wake up outside the real reception window for trying to send TAU update. It also avoid an interruption in sending of all or part of the data out of real visibility window or by waiting for feedback while satellite disappeared and T3324 is still running, i.e. the nominal mode reception window for call backs/confirmation.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted. In particular, the method can be applied beyond loT-NTN device scope, to all devices being served by NTN to correct visibility of fly-over times in the mountains by device position by using a database constructed according to the invention.

## Claims

1. Method to manage connection between a user equipment having a fixed position and a satellite having a nominal visibility window for the user equipment, said nominal visibility window being preliminarily calculated by a network managing said satellite, said method comprising the following steps of, for the network:
- receiving a visibility information from the user equipment,
- altering the calculated nominal visibility window in function of the received visibility information, to obtain an altered visibility window,
- for next connection, paging the user equipment, from the satellite, according to the altered visibility window or providing a PSM information modified according to the altered visibility window.

2. Method according to claim 1, wherein the visibility window information is an environmental condition of the user equipment.

3. Method according to claim 2, wherein the environmental condition is a height of the user equipment.

4. Method according to claim 1, wherein the visibility information is a late appearance indication with an ephemeris data.

5. Method according to claim 1, wherein the visibility information is the time of the late appearance.

6. Method according to claim 1, wherein the visibility information is an early disappearance indication with an ephemeris data.

7. Method according to claim 1, wherein the visibility information is the time of an early disappearance.

8. Method according to claim 1, said method further comprising a step of calculating altered coverage windows for several consecutive satellites visible from the user equipment.

9. Method according to claim 4, wherein the method uses visibility information as received from the user equipment for multiple satellites to calculate altered coverage windows for the user equipment, thus using multiple observations.

10. Method according to claim 9, wherein an accumulation of several observations is done in the device or in the network.

11. Method according to one of the preceding claims, comprising a preliminary step of receiving a configuration flag for limited visibility from the user equipment.

12. Network implementing the method according to one of claims 1 to 11, adapted to manage connection between a user equipment having a fixed position and a satellite having a nominal visibility window for the user equipment, said nominal visibility window being preliminarily calculated by a network managing said satellite, said network being adapted to, while receiving a visibility information from the user equipment, altering the calculated nominal visibility window in function of the received visibility information, to obtain an altered visibility window, said network being further adapted to, for next connection, paging the user equipment, from the satellite, according to the altered visibility window or sending a PSM information modified according to the altered visibility window.

13. User equipment having a fixed position adapted to manage connection listening and being paged or based on PSM with a satellite having a nominal visibility window for the user equipment, said nominal visibility window being preliminarily calculated by a network managing said satellite, said user equipment being adapted to send a visibility information to the network and to being paged according to an altered visibility window or PSM information modified according to the altered visibility window.

14. User equipment according to claim 13, wherein the visibility information is an observed late appearance or an observed early disappearance of the satellite.
